# EUROPEAN PATENT SPECIFICATION

(11) **EP 4 156 954 B1**
(45) Date of publication and mention of the grant of the patent: **16.09.2026**
(21) Application number: 21739476.6
(22) Date of filing: 25.05.2021
(51) Int. Cl.: A23D 9/00, A23D 9/02, A23L 33/115, A23D 7/00, C11C 3/04

(54) **INTERESTERIFIED COTTONSEED STEARIN AS ALTERNATIVE FAT**
INTERESTERIFIZIERTES LEINSAMENSTEARIN ALS ALTERNATIVES FETT
STÉARINE DE GRAINES DE COTON INTERESTÉRIFIÉE UTILISÉE EN TANT QUE GRAISSE ALTERNATIVE

(30) Priority: 29.05.2020 US 202063031886 P
(43) Date of publication of application: 05.04.2023
(73) Proprietor: Cargill, Incorporated, Wayzata, Minnesota 55391 (US)
(72) Inventor: ZACCARELLI DAVOLI, Fernanda, Golden Valley, Minnesota 55416 (US); PARKER, April Rae, Plymouth, Minnesota 55446 (US)
(74) Representative: Cargill IP Department
(86) International application number: PCT/US2021/033963
(87) International publication number: WO 2021/242713

(56) References cited:
- WO-A1-2009/029793
- US-A- 4 425 371
- US-A1- 2011 262 592
- ADHIKARI S ET AL: "Fractionation of Interesterified Fats for the Preparation of Plastic Fats", FETTE.SEIFEN.ANSTRICHMITTEL,, vol. 84, no. 5, 1 May 1982 (1982-05-01), pages 185 - 188, XP001343383

## Description

### BACKGROUND

Fat plays an important and multi-functional role in bakery products. The fat imparts structure development, richness, and tenderness to the product, which improves the eating qualities of the products. For some products like cake and icing, the fat helps provide aeration. For Danish or puff pastry, fat can help provide for the development of flakiness in the product or for other products it can lubricate the gluten. Fat is extremely important in the creaming process (e.g., the combining of fat with other ingredients into a batter or dough) because it helps entrap air which leads to a leavening effect in cakes or an desired volume in icings. Liquid oil does not function the same way and cannot be used in all bakery products. The structure provided from a more solid fat is necessary to deliver on expected quality of bakery products.

Various approaches have been developed to make bakery shortenings without using palm oil. One approach is to use tropical or exotic fats such as cocoa butter, coconut oil, shea butter; however, those alternatives are very expensive and can require supply chain development. Another approach is the use of oleogels, which contains gelators (e.g., materials such as vegetable waxes, emulsifiers, polymers or starch to add structure to liquid oil. Unfortunately, in general, oleogels lack functionality, are very difficult to be produced at large scale, and usually the materials used (gelators) are not label-friendly US 2011/262592 A1 describes a fat composition used as a fat replacer in food.

### SUMMARY OF THE INVENTION

In various aspects, the present invention provides a fat composition. The fat composition can be used in a food item. The composition includes interesterified cottonseed stearin. The invention is illustrated by claims 1 to 15.

In various aspects, the present invention provides a filling for use in a biscuit or cookie. The filling includes interesterified cottonseed stearin that is 15 wt% to 75 wt% of the filling. The filling also includes one or more sugars that are 40 wt% to 80 wt% of the filling. The filling is substantially free of palm oil.

In various aspects, the present invention provides an icing shortening for use in an icing. The icing shortening includes interesterified cottonseed stearin that is 0.1 wt% to 99 wt% of the icing shortening. The icing shortening also includes one or more emulsifiers that are 0.01 wt% to 10 wt% of the icing shortening. The icing shortening is substantially free of palm oil.

In various aspects, the present invention provides an all-purpose shortening. The all-purpose shortening includes interesterified cottonseed stearin that is 0.1 wt% to 100 wt% of the all-purpose shortening. The all-purpose shortening also can include one or more animal-based oils and/or plant-based oils other than interesterified cottonseed stearin that are 1 wt% to 90 wt% of the all-purpose shortening. The all-purpose shortening is substantially free of palm oil.

In various aspects, the present invention provides a flaked fat. The flaked fat includes interesterified cottonseed stearin that is 1 wt% to 80 wt% of the flaked fat. The flaked fat also can include one or more animal-based oils and/or plant-based oils other than cottonseed stearin that are 20 wt% to 99 wt% of the flaked fat. The flaked fat is substantially free of palm oil.

In various aspects, the present invention provides a food item including a composition including interesterified cottonseed stearin.

In various aspects, the present invention provides a biscuit or cookie or a biscuit or cookie including a filling. The biscuit or cookie includes interesterified cottonseed stearin that is 2wt% to 40wt%. The filling includes interesterified cottonseed stearin that is 15 wt% to 75 wt% of the filling. The filling also includes one or more sugars that are 40 wt% to 80 wt% of the filling. The filling is substantially free of palm oil.

In various aspects, the present invention provides an icing or frosting including an icing shortening. The icing shortening includes interesterified cottonseed stearin that is 0.1 wt% to 99 wt% of the icing shortening. The icing shortening also includes one or more emulsifiers that are 0.01 wt% to 10 wt% of the icing shortening. The icing shortening is substantially free of palm oil.

In various aspects, the present invention provides a fried food item including an all-purpose shortening or frying fat. The all-purpose shortening or frying fat includes interesterified cottonseed stearin that is 0.1 wt% to 100 wt% of the all-purpose shortening or frying fat. The all-purpose shortening or frying fat can also include one or more animal-based oils and/or plant-based oils other than interesterified cottonseed stearin that are 1 wt% to 90 wt% of the all-purpose shortening or frying fat. The all-purpose shortening or frying fat is substantially free of palm oil.

In various aspects, the present invention provides a method of making a food item using a fat composition including interesterified cottonseed stearin. The method includes combining the interesterified cottonseed stearin and other edible components to form the food item.

In various aspects, the present invention provides a method of making a fat composition. The method includes combining interesterified cottonseed stearin and other edible components to form the fat composition.

In various aspects, the present invention provides a use of a fat composition including interesterified cottonseed stearin to form a food item, or to partially or completely replace a fat in the food item.

The present invention provides certain advantages over other alternative fat composition and food items including the same. For example, there is a clear demand from the food industry to the oil and fat producers to develop alternatives for palm oil, especially for sustainability reasons. Often, the composition or food item of the present invention is substantially free of palm oil, which is beneficial for sustainability purposes. In various aspects, the composition or food item of the present invention is substantially free of fully hydrogenated fats (e.g., fully hydrogenated fats having an iodine value of less than or equal to 4), which is beneficial for health purposes.

The mechanical properties and physical structure of a fat are responsible for its functionality and affect the quality of food items made therewith (e.g., bakery items, and other items). The fat composition of the present invention has properties and structure (e.g., properties and structure similar to palm oil-based fat products) such that it can be utilized as an alternative fat in a wide variety of food items, such as bakery items. The fat composition of the present invention provides a composition, preferably a substantially palm oil-free composition, that does not rely on the addition of synthesized additives (e.g., emulsifiers, waxes, and the like) or non-lipid materials (e.g., starch, protein, ethyl cellulose, and the like) to provide the properties and structure needed for functionality of the fat replacement and for the quality of food items made therewith. The fat composition of the present invention is an alternative fat to be used as bakery or confectionary shortening or as a component of a bakery shortening that is preferably not palm, not hydrogenated, not exotic or tropical, is pure lipid-based, and is provided from a well-established and sustainable supply chain.

### DETAILED DESCRIPTION OF THE INVENTION

While the disclosed subject matter will be described in conjunction with the enumerated claims, it will be understood that the exemplified subject matter is not intended to limit the claims to the disclosed subject matter.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in any order without departing from the principles of the invention, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. The term "substantially free of" as used herein can mean having none or having a trivial amount of, such that the amount of material present does not affect the material properties of the composition including the material, such that about 0 wt% to about 5 wt% of the composition is the material, or about 0 wt% to about 1 wt%, or about 5 wt% or less, or 0 wt% to 5 wt% but less than, equal to, or greater than about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

### Alternative fat composition.

Various aspects of the present invention provide a fat composition. The composition can be used to partially or completely replace other fats in food items. The composition can provide the properties and structure needed to replace other fats in a wide variety of food items. The fat composition includes interesterified cottonseed stearin.

Cottonseed stearin is the solid component of cottonseed oil that can be separated from the cottonseed oil. Cottonseed includes components that melt at higher temperatures (the stearin) and lower temperatures (the olein). The cottonseed stearin used to produce the interesterified cottonseed stearin can be any suitable cottonseed stearin, such as cottonseed stearin from a first fractionation, cottonseed stearin from a second fractionation, cottonseed stearin from more than a second fractionation, cottonseed stearin from one or more winterization fractionations, or a combination thereof.

Interesterification is a method of rearranging and redistributing the fatty acid on the glycerol fragment of an oil molecule. The rearrangement and redistribution does not change the overall composition of the fatty acids on the starting materials. Interesterification may be accomplished by chemical or enzymatic processes.

Chemical interesterification is a process by which fatty acids are randomly redistributed across the glycerol backbone of the triglyceride. This process is carried out by drying the starting material oil (e.g., a single oil or a blend of oils) and adding an interesterification catalyst, such as sodium methoxide, or another acid or base catalyst. When the reaction is complete, the catalyst is neutralized. The rearranged product can be washed, bleached, and deodorized. The rearranged product can have different physical-chemical properties than the starting material oil.

Enzymatic interesterification is another means by which oils and fats can be modified. This process uses most commonly, immobilized lipases to rearrange the fatty acids on the glycerol backbone of the triglyceride. There are immobilized lipases that can target fatty acids at specific positions on the glycerol backbone, therefore, the rearrangement of fatty acids during such an enzymatic interesterification can be less random than with chemical interesterification. After interesterification, the oil is deodorized to make finished oil products. Enzymatic interesterification has gained popularity over the last decades due to the flexibility of the process and reduced capital process input.

The interesterified cottonseed stearin in the fat composition can be chemically interesterified cottonseed stearin, enzymatically interesterified cottonseed stearin, or a combination thereof. The interesterification can be performed to any suitable extent between the arrangement and distribution of the fatty acids in the starting materials versus the steady-state arrangement and distribution of the fatty acids obtained when the interesterification is allowed to run to substantial completion. In various aspects, the interesterified cottonseed stearin in the fat composition is a chemically interesterified cottonseed stearin that has been chemically interesterified to substantial completion at which point it has reached a relatively steady-state arrangement and distribution of the fatty acids on the glycerol units of the oil molecules.

Any suitable proportion of the fat composition can be the interesterified cottonseed stearin, such as 0.01 wt% to 100 wt% of the composition is the interesterified cottonseed stearin, 25 wt% to 99 wt%, or 0.01 wt% or more but less than or equal to 100 wt%, or 0.01 wt% to 100 wt% and less than, equal to, or greater than 0.05 wt%, 0.1, 0.2, 0.4, 0.6, 0.8, 1, 1.5, 2, 2.5, 3, 4, 5, 6, 8, 10, 12, 14, 16, 18, 20, 25, 30, 35, 40, 45, 50, 55, 60, 65, 70, 75, 80, 82, 84, 86, 88, 90, 92, 94, 95, 96, 97, 98, 99, 99.9 wt%, or 99.99 wt% or less of the composition is the interesterified cottonseed stearin.

In various aspects, the composition includes non-interesterified cottonseed stearin. The non-interesterified cottonseed stearin can include any suitable non-interesterified cottonseed stearin, such as cottonseed stearin from a first fractionation, cottonseed stearin from a second fractionation, cottonseed stearin from more than a second fractionation, cottonseed stearin from one or more winterization fractionations, or a combination thereof. The non-interesterified cottonseed stearin can form any suitable proportion of the fat composition, such as 0.01 wt% to 99.99 wt%, or 0.01 wt% or more but less than or equal to 99.99 wt%, or 0.01 wt% to 99.99 wt% and less than, equal to, or greater than 0.05, 0.1, 0.2, 0.4, 0.6, 0.8, 1, 1.5, 2, 2.5, 3, 4, 5, 6, 8, 10, 12, 14, 16, 18, 20, 25, 30, 35, 40, 45, 50, 55, 60, 65, 70, 75, 80, 82, 84, 86, 88, 90, 92, 94, 95, 96, 97, 98, 99, 99.9 wt%, or 99.99 wt%. In various aspects, the composition is substantially free of non-interesterified cottonseed stearin, such as including 0 wt% non-interesterified cottonseed stearin, or less than 5 wt% non-interesterified cottonseed stearin, or less than 4.5%, 4, 3.5, 3, 2.5, 2, 1.5, 1, 0.8, 0.6, 0.5, 0.4, 0.3, 0.2, 0.1, 0.05 wt%, or less than 0.01 wt% non-interesterified cottonseed stearin.

The composition can be substantially free of palm oil, such as including a fraction thereof, a high oleic version thereof, a hydrogenated oil formed therefrom, an interesterified oil formed therefrom, or a combination thereof. For example, the composition can include 0 wt% palm oil, or less than 5 wt% palm oil, or less than 4.5%, 4, 3.5, 3, 2.5, 2, 1.5, 1, 0.8, 0.6, 0.5, 0.4, 0.3, 0.2, 0.1, 0.05 wt%, or less than 0.01 wt% palm oil.

The composition can be substantially free of fully hydrogenated oils. As used herein, a fully hydrogenated oil is an oil having an iodine value equal to or less than 4. For example, the composition can include 0 wt% fully hydrogenated oils, or less than 5 wt% fully hydrogenated oils, or less than 4.5%, 4, 3.5, 3, 2.5, 2, 1.5, 1, 0.8, 0.6, 0.5, 0.4, 0.3, 0.2, 0.1, 0.05 wt%, or less than 0.01 wt% fully hydrogenated oils.

The composition can be substantially free of emulsifiers, non-cottonseed waxes, non-lipid materials, starch, protein, cellulose, cellulose derivatives, plant-based oils other than interesterified cottonseed stearin, or a combination thereof; for example, the composition can include 0 wt% of any one or more of these components, or less than 5 wt%, or less than 4.5%, 4, 3.5, 3, 2.5, 2, 1.5, 1, 0.8, 0.6, 0.5, 0.4, 0.3, 0.2, 0.1, 0.05 wt%, or less than 0.01 wt% of any one or more of these components.

In addition to the interesterified cottonseed stearin, the fat composition can be substantially free of other materials, or the fat composition can include any one or more suitable components. For example, the fat composition can include an emulsifier, a wax (e.g., a non-cottonseed stearin derived wax, or a cottonseed stearin derived wax), a carbohydrate (e.g., starch), a protein, cellulose, a cellulose derivative (e.g., ethyl cellulose), a food coloring, a filler (e.g., fibers), a flavoring, a plant-based oil other than interesterified cottonseed stearin, an animal-based oil (e.g., lard, tallow, milk fat, and the like), or a combination thereof. The fat composition can include an interesterified oil other than cottonseed stearin (e.g., interesterified soybean oil), a fully hydrogenated oil (e.g., fully hydrogenated cottonseed oil), a polysorbate, a monoglyceride, a diglyceride, or a combination thereof.

In aspects of the composition that include one or more plant-based oils in addition to the interesterified cottonseed stearin, the plant-based oil can be any suitable plant-based oil, such as coconut oil, corn oil, canola oil, cottonseed oil, olive oil, palm oil, peanut oil, rapeseed oil, safflower oil, sesame oil, soybean oil, sunflower oil, cocoa butter, shea butter, mango butter, a fraction thereof, a middle or high oleic version thereof, a low linolenic version thereof, a low saturated version thereof, a hydrogenated oil formed therefrom (e.g. partially or fully hydrogenated), an interesterified oil formed therefrom, or a combination thereof. The one or more plant-based oils other than the interesterified cottonseed stearin can form any suitable proportion of the composition, such as 0.01 wt% to 99.99 wt% of the composition, 10 wt% to 90 wt%, or 0.01 wt% or more but less than or equal to 99.99 wt%, or 0.01 wt% to 99.99 wt% and less than, equal to, or greater than 0.05, 0.1, 0.2, 0.4, 0.6, 0.8, 1, 1.5, 2, 2.5, 3, 4, 5, 6, 8, 10, 12, 14, 16, 18, 20, 25, 30, 35, 40, 45, 50, 55, 60, 65, 70, 75, 80, 82, 84, 86, 88, 90, 92, 94, 95, 96, 97, 98, 99, 99.9 wt%, or 99.99 wt%.

The fat composition can be any suitable composition for replacing fat used in a food item and/or for replacing fat used in preparing a food item. For example, the composition can be a shortening, an all-purpose shortening, an icing shortening, a filling fat, a flaked fat, a frying fat, a pumpable shortening, or a combination thereof. The composition can be a, an icing shortening, an all-purpose shortening, filling shortening, pastry shortening, a pie shortening, a cookie shortening, a cake shortening or a flaked fat.

The food item can be any suitable food item that includes the fat composition, such as a food item including the fat composition as a partial or complete replacement for another fat composition (e.g., a palm oil-based fat composition). The food item can include a fried food item, a bakery food item, a biscuit filling, an icing, a frosting, a confectionary item, a bonbon filling, an ice-cream coating, a chocolate or nut spreads, a margarine or spread (water in oil emulsion) or a combination thereof. The food item can include a potato chip, a French fry, a fried-chicken product, a tempura product, a biscuit, a cookie, a pie, a cake, a wafer, a filling, a dough, a glaze, a pastry, a donut, an icing, a frosting, a pizza crust, an American style biscuit, a chewing gum, a meat alternative, a dairy analog product (e.g., a non-dairy or reduced-dairy substitute product for a dairy product), or a combination thereof.

The alterative fat composition can be a biscuit filling (e.g., for a biscuit or a cookie). The interesterified cottonseed stearin can be 15 wt% to 75 wt% of the biscuit filling, or 25 wt% to 60 wt%, or 15 wt% or more but less than or equal to 75 wt%, or 15 wt% to 75 wt% and less than, equal to, or greater than 20 wt%, 25, 30, 35, 40, 45, 50, 55, 60, 65, 70 wt%, or 75 wt%. The biscuit filling can include sugar; for example, sugar can be 40 wt% to 80 wt% of the biscuit filling, or 40 wt% or more but less than or equal to 80 wt%, or 40 wt% to 80 wt% and less than, equal to, or greater than 45 wt%, 50, 55, 60, 65, 70, 75 wt%, or 80 wt%. The biscuit filling can include salt, vanilla, emulsifier, flavoring, coloring, cocoa powder, or a combination thereof.

The alterative fat composition can be an icing shortening (e.g., for forming an icing or frosting). The interesterified cottonseed stearin can be 0.1 wt% to 99 wt% of icing shortening, or 40 wt% to 97 wt%, or 0.1 wt% or more but less than or equal to 99 wt%, or 0.1 wt% to 99 wt% and less than, equal to, or greater than 1 wt%, 2, 5, 10, 15, 20, 25, 30, 35, 40, 45, 50, 55, 60, 65, 70, 75, 80, 85, 90, 95, 96, 97, 98 wt%, or 99 wt%. The icing shortening can include one or more emulsifiers; for example, the one or more emulsifiers can be 0.01 wt% to 10 wt% of the composition, or 0.01 wt% or more, or less than, equal to, or greater than 0.5 wt%, 1, 2, 4, 6, 8 wt%, or 10 wt%.

The alterative fat composition can be an all-purpose shortening. The interesterified cottonseed stearin can be 0.1 wt% to 100 wt% of the all-purpose shortening, or 10 wt% to 100 wt%, or 0.1 wt% or more but less than or equal to 100 wt%, or 0.1 wt% to 100 wt% and less than, equal to, or greater than 1 wt%, 2, 4, 6, 8, 10, 15, 20, 25, 30, 35, 40, 45, 50, 55, 60, 65, 70, 75, 80, 85, 90, 95, 96, 97, 98, 99, 99.5, 99.9 wt%, or 100 wt%. The all-purpose shortening can include one or more animal-based oils and/or plant-based oils other than interesterified cottonseed stearin, such as 1 wt% to 90 wt%, or 1 wt% or more but less than or equal to 90 wt%, or 1 wt% to 90 wt% and less than, equal to, or greater than 5 wt%, 10, 15, 20, 25, 30, 35, 40, 45, 50, 55, 60, 65, 70, 75, 80, 85 wt%, or 90 wt%. The all-purpose shortening can include an interesterified plant-based oil other than interesterified cottonseed stearin, such as interesterified soybean oil. The all-purpose shortening can include a fully hydrogenated oil (e.g., an oil having an iodine value equal to or less than 4), such as a fully hydrogenated cottonseed oil.

The alterative fat composition can be a flaked fat. The interesterified cottonseed stearin can be 1wt% to 80 wt% of the flaked fat, or 10 wt% to 50 wt% of the flaked fat, or 5 wt% or more but less than or equal to 80 wt%, or 1 wt% to 80 wt% and less than, equal to, or greater than 5 wt%, 10, 15, 20, 25, 30, 35, 40, 45, 50, 55, 60, 65, 70, 75 wt%, or 80 wt%. The flaked fat can include one or more animal-based oils or plant-based oils other than cottonseed stearin, such as 20 wt% to 99 wt% of the composition, or 20 wt% or more but less than or equal to 99 wt%, or 20 wt% to 99 wt% and less than, equal to, or greater than 25 wt%, 30, 35, 40, 45, 50, 55 wt%, or 60 wt%. The flaked fat can include a fully hydrogenated oil, such as a fully hydrogenated cottonseed oil having an iodine value equal to or less than 4.

The interesterified cottonseed stearin can have suitable properties for replacing other fats in food items or in the preparation of food items, such as providing appropriate structure (e.g., hardness) and/or other functionality to enable production of a food item of comparable or improved quality to a food item prepared from conventional or palm oil-based fats.

The interesterified cottonseed stearin can have any suitable melting point, such as determined via AOCS method Cc18-80, such as 20 °C to 60 °C, 25°C to 50°C, or 20 °C or more but less than or equal to 60 °C, or 25 °C to 60 °C and less than, equal to, or greater than 26 °C, 28, 30, 32, 34, 36, 38, 40, 41, 42, 43, 44, 46, 48, 50, 52, 54, 56, 58 °C, or 60 °C.

The interesterified cottonseed stearin can have any suitable onset crystallization point as determined via DSC, such as 0 °C to 40 °C, 10 °C to 30 °C, or 0 °C or more but less than or equal to 40 °C, or 0 °C to 40 °C and less than, equal to, or greater than 5 °C, 10, 15, 20, 25, 30, 35 °C, or 40 °C.

Any suitable proportion of the interesterified cottonseed stearin can be C16:0 fatty acid esters (i.e., proportion of the total fatty acids on glycerol units) that are C16:0 fatty acids, such as 20 wt% to 50 wt%, 25 wt% to 45 wt%, or 20 wt% or more but less than or equal to 50 wt%, or 20 wt% to 50 wt% and less than, equal to, or greater than 36 wt%, 37, 38, 39, 40, 41, 42, 43, 44, 45, 46, 48 wt%, or 50 wt%.

Any suitable proportion of the interesterified cottonseed stearin can be C18:1 fatty acid esters, such as 5 wt% to 25 wt%, 11 wt% to 20wt%, or 5 wt% or more but less than or equal to 25 wt%, or 5 wt% to 25 wt% and less than, equal to, or greater than 6, 8, 10, 11, 12, 13, 14, 15, 16, 17, 18, 20, 22, 24 wt%, or 25 wt%.

A suitable proportion of the interesterified cottonseed stearin is C18:2 fatty acid esters, of 30 wt% to 60 wt%, or can be 37 wt% to 55 wt%, or 30 wt% or more but less than or equal to 60 wt%, or 30 wt% to 60 wt% and less than, equal to, or greater than 35 wt%, 36, 37, 38, 39, 40, 41, 42, 43, 44, 45, 50, 55 wt%, or 60 wt%.

Any suitable proportion of the interesterified cottonseed stearin can be saturated fatty acid esters, such as 25 wt% to 60 wt%, 30 wt% to 50 wt%, or 30 wt% or more but less than or equal to 60 wt%, or 30 wt% to 60 wt% and less than, equal to, or greater than 35 wt%, 40, 41, 42, 43, 44, 45, 46, 47, 48, 49, 50, 55 wt%, or 60 wt%.

### Food item.

Various aspects of the present invention provide a food item including the fat composition including interesterified cottonseed stearin. The food item can be any suitable food item that includes that alternative fat composition. For example, the food item can include a fried food item, a bakery food item, a biscuit filling, an icing, a frosting, a confectionary item, , a bonbon filling, an ice-cream coating, a chocolate or nut spreads, a margarine or spread (water in oil emulsion) or a combination thereof. The food item can include a potato chip, a French fry, a fried-chicken product, a tempura product, a biscuit, a cookie, a pie, a cake, a wafer, a filling, a dough, a glaze, a pastry, a donut, an icing, a frosting, a pizza crust, an American style biscuit, a chewing gum, a meat alternative, a dairy analog product (e.g., a non-dairy or reduced-dairy substitute product for a dairy product), or a combination thereof.

In various aspects, the food item can be substantially free of palm oil (e.g., both the fat composition and the remainder of the food item are substantially free of palm oil). In other aspects, the fat composition, the remainder of the food item, or a combination thereof, include at least some palm oil.

In various aspects, the food item can be substantially free of fully hydrogenated oils (e.g., both the fat composition and the remainder of the food item are substantially free of fully hydrogenated oils). Fully hydrogenated oils can have an iodine value of equal to or less than 4. In other aspects, the fat composition, the remainder of the food item, or a combination thereof, include at least some fully hydrogenated oil.

The food item can be a biscuit or cookie that may or may not include a filling. The biscuit or cookie includes interesterified cottonseed stearin that is 2wt% to 40wt%. The filling can include interesterified cottonseed stearin that is 15 wt% to 75 wt% of the filling, or 25 wt% to 60 wt%, or 15 wt% or more but less than or equal to 75 wt%, or 15 wt% to 75 wt% and less than, equal to, or greater than 20 wt%, 25, 30, 35, 40, 45, 50, 55, 60, 65, 70 wt%, or 75 wt%. The filling can also include one or more sugars that are 40 wt% to 80 wt% of the filling, or 40 wt% or more but less than or equal to 80 wt%, or 40 wt% to 80 wt% and less than, equal to, or greater than 45 wt%, 50, 55, 60, 65, 70, 75 wt%, or 80 wt%. The filling can be substantially free of palm oil. The filling can be substantially free of fully hydrogenated oil having an iodine value equal to or less than 4.

The food item can be an icing or frosting including an icing shortening. The icing shortening can include interesterified cottonseed stearin that is 0.1 wt% to 99 wt% of the icing shortening, or 40 wt% to 90 wt%, or 0.1 wt% or more but less than or equal to 99 wt%, or 0.1 wt% to 99 wt% and less than, equal to, or greater than 1 wt%, 2, 5, 10, 15, 20, 25, 30, 35, 40, 45, 50, 55, 60, 65, 70, 75, 80, 85, 90, 95, 96, 97, 98 wt%, or 99 wt%. The icing shortening can include one or more emulsifiers that are 0.01 wt% to 10 wt% of the icing shortening, or 0.01 wt% or more but less than or equal to 10 wt%, or 0.01 wt% to 10 wt% and less than, equal to, or greater than 0.1 wt%, 0.5, 1, 2, 4, 6, 8 wt%, or 10 wt%. The icing shortening can be substantially free of palm oil. The icing shortening can be substantially free of fully hydrogenated oil having an iodine value equal to or less than 4.

The food item can be a fried food item including an all-purpose shortening or a frying fat. The food item can be prepared by frying the food item in the all-purpose shortening or frying fat. The all-purpose shortening or frying fat can include interesterified cottonseed stearin that is 0.1 wt% to 100 wt% of the all-purpose shortening or frying fat, or 10 wt% to 100 wt%, or 0.1 wt% or more but less than or equal to 100 wt%, or 0.1 wt% to 100 wt% and less than, equal to, or greater than 1 wt%, 2, 4, 6, 8, 10, 15, 20, 25, 30, 35, 40, 45, 50, 55, 60, 65, 70, 75, 80, 85, 90, 95, 96, 97, 98, 99, 99.5, 99.9 wt%, or 100 wt%. The all-purpose shortening or frying fat can also include one or more animal-based oils and/or plant-based oils other than interesterified cottonseed stearin that are 1 wt% to 90 wt% of the all-purpose shortening or frying fat, or 1 wt% or more but less than or equal to 90 wt%, or 1 wt% to 90 wt% and less than, equal to, or greater than 5 wt%, 10, 15, 20, 25, 30, 35, 40, 45, 50, 55, 60, 65, 70, 75, 80, 85 wt%, or 90 wt%. The all-purpose shortening or frying fat can be substantially free of palm oil.

### Method of making a food item.

Various aspects of the present invention provide a method of making a food item using the fat composition including interesterified cottonseed stearin. The method can be any suitable method that forms a food item including the fat composition. The method can include combining the interesterified cottonseed stearin and other edible components to form the food item. For example, the combining of the interesterified cottonseed stearin and the other edible components can include frying the other components in the interesterified cottonseed stearin, forming an icing, adding a filling to a biscuit or cookie, adding an icing to a bakery food item, or a combination thereof.

### Method of making the fat composition.

Various aspects of the present invention provide a method of making the fat composition including interesterified cottonseed stearin. The method can be any suitable method that forms the fat composition. The method can include combining the interesterified cottonseed stearin and other one or more edible components to form the fat composition.

The combining of the interesterified cottonseed stearin and the other one or more edible component can be performed in any suitable way. The combining can include melting the interesterified cottonseed stearin and blending the other edible components therewith. The combining can also include blending and further processing such as interesterification and/or hydrogenation and/or fractionation.

The method can further include crystallizing the mixture of the interesterified cottonseed stearin and the other edible components. The method can further include mechanical working such as kneading the crystallized mixture of the interesterified cottonseed stearin and the other edible components, to form the fat composition.

### Use of the fat composition.

Various aspects of the present invention provide a use of the fat composition including interesterified cottonseed stearin. The use can be any suitable use, such as any suitable use that aligns with the methods of using the fat composition described herein. The use can be to partially or completely replace a fat in a food item, such as any food item described herein. The use can be to form a food item.

Among others at least some of the advantages of the composition of the present invention resides in the facts that it provide a viable non-palm alternative for biscuit (cookie) fillings. The thus produced biscuit filling has the right consistency such that it was soft enough so the top biscuit adheres to the filling but firm enough so that the filling does not squeeze out of the sandwich biscuit. It further provides a viable non-palm alternative for icing. It provides a viable non-palm alternative for icing. It provides a viable non-palm alternative for flaked fat.

### Exemplary Aspects of the Present Invention.

A fat composition for use in a food item, the composition comprising:
interesterified cottonseed stearin.

A fat composition for use in a food item wherein the interesterified cottonseed stearin comprises interesterified cottonseed stearin from a first fractionation, interesterified cottonseed stearin from a second fractionation, interesterified cottonseed stearin from more than a second fractionation, interesterified cottonseed stearin from one or more winterization fractionations, or a combination thereof.

A fat composition for use in a food item, wherein the interesterified cottonseed stearin comprises chemically interesterified cottonseed stearin. The interesterified cottonseed stearin may comprise interesterified cottonseed stearin from a first fractionation, interesterified cottonseed stearin from a second fractionation, interesterified cottonseed stearin from more than a second fractionation, interesterified cottonseed stearin from one or more winterization fractionations, or a combination thereof. The interesterified cottonseed stearin is chemically interesterified to completion.

Alternatively, the interesterified cottonseed stearin may comprise enzymatically interesterified cottonseed stearin.

Preferably, the fat composition is substantially free of palm oil.

It further provides the composition of the present invention wherein the composition is substantially free of fully hydrogenated oils having an iodine value of less than 4.

It provides the composition as previously described, wherein the composition is substantially free of emulsifiers, non-cottonseed waxes, starch, protein, cellulose, cellulose derivatives, plant-based oils other than interesterified cottonseed stearin, or a combination thereof.

It provides the composition as previously described, wherein about 0.01 wt% to 100 wt% of the composition is the interesterified cottonseed stearin.

It provides the composition as previously described, wherein about 25 wt% to 99 wt% of the composition is the interesterified cottonseed stearin.

It provides the composition as previously described, which is further comprising non-interesterified cottonseed stearin.

Such a non-interesterified cottonseed stearin comprises cottonseed stearin from a first fractionation, cottonseed stearin from a second fractionation, cottonseed stearin from more than a second fractionation, cottonseed stearin from one or more winterization fractionations, or a combination thereof.

The non-interesterified cottonseed stearin can be present in an amount of about 0.01 wt% to 99.99 wt% of the composition

It provides the composition as previously described, wherein the composition further comprises an emulsifier, a wax, a carbohydrate, a protein, cellulose, a cellulose derivative, a food coloring, a filler, a flavoring, a plant-based oil other than interesterified cottonseed stearin, an animal-based oil, or a combination thereof.

It provides the composition as previously described, wherein the plant-based oil comprises coconut oil, corn oil, canola oil, cottonseed oil, olive oil, palm oil, peanut oil, rapeseed oil, safflower oil, sesame oil, soybean oil, sunflower oil, cocoa butter, shea butter, mango butter, a fraction thereof, a middle or high oleic version thereof, a low linolenic version thereof, a low saturated version thereof,, a hydrogenated oil formed therefrom (e.g. partially or fully hydrogenated), an interesterified oil formed therefrom, or a combination thereof.

It provides the composition as previously described, wherein the one or more plant-based oils other than interesterified cottonseed stearin are 0.01 wt% to 99.99 wt% of the composition.

It provides the composition as previously described, wherein the one or more plant-based oils other than interesterified cottonseed stearin are 10 wt% to 90 wt% of the composition.

It provides the composition as previously described, wherein the composition further comprises interesterified soybean oil, fully hydrogenated cottonseed oil, potassium sorbate, a polysorbate, a monoglyceride, a diglyceride, or a combination thereof.

It provides the composition as previously described, wherein the composition is a shortening, an all-purpose shortening, an icing shortening, a filling fat, a flaked fat, a frying fat, a pumpable shortening, or a combination thereof.

It provides the composition as previously described, wherein the composition is an icing shortening, an all-purpose shortening, a filling shortening, pastry shortening, a pie shortening, a cookie shortening, a cake shortening or a flaked fat.

It provides the composition as previously described, wherein the food item comprises a fried food item, a bakery food item, a biscuit filling, an icing, a frosting, a confectionary item, a bonbon filling, an ice-cream coating, a chocolate or nut spreads, a margarine or spread (water in oil emulsion) or a combination thereof.

It provides the composition as previously described, wherein the food item comprises a potato chip, a French fry, a fried-chicken product, a tempura product, a biscuit, a cookie, a pie, a cake, a wafer, a filling, a dough, a glaze, a pastry, a donut, an icing, a frosting, a pizza crust, an American style biscuit, a chewing gum, a meat alternative, a dairy analog product, or a combination thereof.

It provides the composition as previously described, wherein the composition is a biscuit filling, wherein 15 wt% to 75 wt% of the composition is the interesterified cottonseed stearin.

It provides the composition as previously described, wherein the composition is a biscuit filling, wherein 25 wt% to 60 wt% of the composition is the interesterified cottonseed stearin.

It provides the composition wherein the composition is a biscuit filling as previously described, and wherein 40 wt% to 80 wt% of the composition is sugar.

It provides the composition wherein the composition is a biscuit filling as previously described, wherein the composition comprises salt, vanilla, emulsifier, flavoring, coloring, cocoa powder, or a combination thereof.

It provides the composition as previously described, wherein the composition is an icing shortening, wherein 0.1 wt% to 99 wt% of the composition is the interesterified cottonseed stearin

It provides the composition as previously described, wherein the composition is an icing shortening, and wherein 40 wt% to 97 wt%, of the composition is the interesterified cottonseed stearin.

It provides the composition wherein the composition is an icing shortening, wherein 0.01 wt% to 10 wt% of the composition is one or more emulsifiers.

It provides the composition as previously described, wherein the composition is an all-purpose shortening, wherein 0.1 wt% to 100 wt% of the composition is the interesterified cottonseed stearin.

It provides the composition as previously described, wherein the composition is an all-purpose shortenin, wherein 10 wt% to 100 wt% of the composition is the interesterified cottonseed stearin.

It provides a composition, wherein the composition is the all-purpose shortening as previously described, wherein such as 1 wt% to 90 wt % of the composition is one or more animal-based oils and/or plant-based oils other than interesterified cottonseed stearin.

It provides a composition, wherein the composition is the all-purpose shortening as previously described, wherein the composition comprises an interesterified plant-based oil other than interesterified cottonseed stearin.

It provides a composition, wherein the composition is the all-purpose shortening as previously described, wherein the composition comprises a fully hydrogenated oil.

It provides a composition as previously described, wherein the composition is a flaked fat, wherein 1wt% to 80 wt% of the composition is the interesterified cottonseed stearin.

It provides a composition, wherein the composition is the flaked fat as previously described, wherein 10 wt% to 50 wt% of the composition is the interesterified cottonseed stearin.

It provides a composition, wherein the composition is the flaked fat as previously described, wherein 50 wt% to 90 wt% of the composition is one or more animal-based oils or plant-based oils other than cottonseed stearin.

It provides a composition, wherein the composition is the flaked fat as previously described, wherein the composition comprises a fully hydrogenated oil.

It provides the fat composition as previously described wherein the interesterified cottonseed stearin has a melting point of 20 °C to 60 °C.

It provides the fat composition as previously described, wherein the interesterified cottonseed stearin has a melting point of 25°C to 50 °C.

It provides the fat composition as previously described, wherein 20 wt% to 50 wt%, of the interesterified cottonseed stearin is C16:0 fatty acid esters.

It provides the fat composition as previously described, wherein 25 wt% to 45 wt%, of the interesterified cottonseed stearin is C16:0 fatty acid esters.

It provides the fat composition as previously described, wherein 5 wt% to 25 wt% of the interesterified cottonseed stearin is C18:1 fatty acid esters.

It provides the fat composition as previously described, wherein 11 wt% to 20wt%, of the interesterified cottonseed stearin is C18:1 fatty acid esters.

It provides the fat composition as previously described, wherein 30 wt% to 60 wt% of the interesterified cottonseed stearin is C18:2 fatty acid esters.

It provides the fat composition as previously described, wherein 37 wt% to 55 wt%, of the interesterified cottonseed stearin is C18:2 fatty acid esters.

It provides the fat composition as previously described, wherein 25 wt% to 60 wt%, of the interesterified cottonseed stearin is saturated fatty acid esters.

It provides the fat composition as previously described, wherein 30 wt% to 50 wt%, of the interesterified cottonseed stearin is saturated fatty acid esters.

Furthermore it provides a filling for use in a biscuit or cookie, the filling comprising:
interesterified cottonseed stearin that is 15 wt% to 75 wt% of the filling; and
one or more sugars that are 40 wt% to 80 wt% of the filling;
wherein the filling is substantially free of palm oil and fully hydrogenated oil having an iodine value less than 4.

It further provides an icing shortening for use in an icing, the icing shortening comprising:
interesterified cottonseed stearin that is 0.1 wt% to 99 wt% of the icing shortening; and
one or more emulsifiers that are 0.01 wt% to 10 wt% of the icing shortening;
wherein the icing shortening is substantially free of palm oil and fully hydrogenated oil having an iodine value equal to or less than 4.

It provides an all-purpose shortening comprising:
interesterified cottonseed stearin that is 0.1 wt% to 100 wt% of the all-purpose shortening; and
one or more animal-based oils and/or plant-based oils other than interesterified cottonseed stearin that are 1 wt% to 90 wt% of the all-purpose shortening;
wherein the all-purpose shortening is substantially free of palm oil.

It provides a flaked fat comprising:
interesterified cottonseed stearin that is 1 wt% to 80 wt% of the flaked fat; and
one or more animal-based oils or plant-based oils other than cottonseed stearin that are 20 wt% to 990 wt% of the flaked fat;
wherein the flaked fat is substantially free of palm oil.

It provides the food item of the present invention, wherein the food item comprises a fried food item, a bakery food item, a biscuit filling, an icing, a frosting, a confectionary item, , a bonbon filling, an ice-cream coating, a chocolate or nut spreads, a margarine or spread (water in oil emulsion) or a combination thereof.

The food item of the present invention wherein the food item comprises a potato chip, a French fry, a fried-chicken product, a tempura product, a biscuit, a cookie, a pie, a cake, a wafer, a filling, a dough, a glaze, a pastry, a donut, an icing, a frosting, a pizza crust, an American style biscuit, a chewing gum, a meat alternative, a dairy analog product, or a combination thereof.

It further provides the food item of the present invention, wherein the food item is substantially free of palm oil.

It further provides the food item of the present invention, wherein the food item is substantially free of fully hydrogenated oils.

It provides a biscuit or cookie comprising a filling, the filling comprising:
interesterified cottonseed stearin that is 15 wt% to 75 wt% of the filling; and
one or more sugars that are 40 wt% to 80 wt% of the filling;
wherein the filling is substantially free of palm oil and fully hydrogenated oil having an iodine value less than 4.

It provides an icing or frosting comprising an icing shortening, the icing shortening comprising:
interesterified cottonseed stearin that is 0.1 wt% to 99 wt% of the icing shortening; and
one or more emulsifiers that are 0.01 wt% to 10 wt% of the icing shortening;
wherein the icing shortening is substantially free of palm oil and fully hydrogenated oil having an iodine value less than 4.

It provides a fried food item comprising an all-purpose shortening or a frying fat, the all-purpose shortening or frying fat comprising:
interesterified cottonseed stearin that is 0.1 wt% to 100 wt% of the all-purpose shortening or frying fat; and
one or more animal-based oils and/or plant-based oils other than interesterified cottonseed stearin that are 1 wt% to 90 wt% of the all-purpose shortening or frying fat;
wherein the all-purpose shortening or frying fat is substantially free of palm oil.

It provides a method of making a food item using the composition of present invention, the method comprising:
combining the interesterified cottonseed stearin and other edible components to form the food item.

It further provides the method of present invention, wherein combining of the interesterified cottonseed stearin and the other edible components comprises frying the other components in the interesterified cottonseed stearin, forming an icing, adding a filling to a biscuit or cookie, adding an icing to a bakery food item, or a combination thereof.

It further provides the method of the present invention, wherein the combining comprises melting the interesterified cottonseed stearin and blending the other edible components therewith.

It further provides the method of the present invention wherein the method further comprises crystallizing the mixture of the interesterified cottonseed stearin and the other edible components.

It provides the method of present invention, wherein the method further comprises kneading the crystallized mixture of the interesterified cottonseed stearin and the other edible components.

Furthermore it provides a use of the composition of the present invention, comprising replacing fat in a food item.

It further provides a use of the composition of present invention, comprising forming a food item with the composition.

### Examples

Various aspects of the present invention can be better understood by reference to the following Examples which are offered by way of illustration. The present invention is not limited to the Examples given herein.

Chemically interesterified double fractionated cottonseed stearin (IE DFCS) and chemically interesterified cottonseed stearin (IE CS) were used in the Examples herein. The chemical interesterification process is described in detail as following. The double fractionated cotton stearin was first dried (200 mbar, 110 °C, 30 min under agitation). Vacuum was broken to add the catalyst sodium methoxide (anhydrous). After the addition of the sodium methoxide (0.1% w/w), the reaction was started under vacuum (100 mbar) and continued during a period of 30 min. The vacuum was released and a 50% citric acid solution was added to inactivate the catalyst (5-10 min of agitation). The cotton stearin was post bleached with 1.25% activated bleaching clay (Pure-Flo B80) (200 mbar, 110 °C, 30 min under agitation). The bleaching clay was removed by filtration over a preheated Buchner filter. After bleaching, the cotton stearin was deodorized. Deodorization was completed by initially heating the material to 240°C under vacuum (<1 torr). Once target temperature was achieved, steam stripping via a heated water addition flask was conducted for 1 hour (5% water addition to generate steam for 1 hour). The water feed to the steam flask was then stopped and the material was cooled to 110°C under vacuum. After reaching target temperature, a nitrogen overlay was added as vacuum was released and interesterified cotton stearin was pulled from the reactor flask.

Tables 1 and 2 show properties of the interesterified double fractionate cotton stearin (IE DFCS) and interesterified cottonseed stearin (IE CS), as well as of cottonseed stearin (CS) and double fractionated cottonseed stearin (DFCS). Table 1 shows solid fat content, melting point, fatty acid profile, and saturated fatty acid content, and Table 2 shows the crystallization and melting profiles of the materials determined by differential scanning calorimetry (DSC). The melting points in Table 1 were determined by AOCS method Cc18-80, by determining the temperature at which a fat will sufficiently become fluid to flow under the conditions of the test. The solid fat content in Table 1 was determined by AOCS method Cd 16b-93 and the fatty acid profile was determined by AOCS method Ce 1h-05.

**Table 1. Solid fat content (SFC), melting point, fatty acid profile (FAP), and saturated fatty acid content of CS, IE CS, DFCSand IE DFCS.**

| | Cottonseed stearin (CS) | Chemically interesterified cottonseed stearin (IE CS) | Double fractionated cottonseed stearin (DFCS) | Chemically interesterified double fractionated cottonseed stearin (IE DFCS) |
|---|---|---|---|---|
| SFC (%) at 10°C | 19.3 | 22.9 | 43.9 | 46.3 |
| SFC (%) at 20 °C | 1.0 | 9.4 | 19.6 | 27.2 |
| SFC (%) at 30°C | 0 | 3.6 | 2.1 | 14.0 |
| SFC (%) at 40°C | 0 | 0.7 | 0 | 7.2 |
| Melting point, °C | NA | 31.8 | 29.7 | 42.3 |
| FAP, C12:0, % | 0.01 | 0.02 | 0.01 | 0.01 |
| FAP, C16:0, % | 30.1 | 31.0 | 42.1 | 42.2 |
| FAP, C18:0, % | 2.4 | 2.2 | 2.0 | 2.0 |
| FAP, C18:1, % | 16.2 | 15.8 | 13.6 | 13.5 |
| FAP C18:2, % | 49.2 | 48.9 | 40.6 | 40.7 |
| FAP, C18:3, % | 0.2 | 0.2 | 0.2 | 0.1 |
| Saturated FA, % | 33.6 | 34.3 | 45.1 | 45.2 |

**Table 2. Crystallization and melting profiles of CS, IE CS, DFCS, and IE DFCS.**

| Material | Crystallization profile | | | | | Melting profile | | | |
|---|---|---|---|---|---|---|---|---|---|
| | Onset (T°C) | Peak 1 (T°C) | Peak 2 (T°C) | Peak 3 (T°C) | Enthalpy (J/g) | Peak 1 (T°C) | Peak 2 (T°C) | Peak 3 (T°C) | Enthalpy (J/g) |
| CS | 0.01 | 5.60 | -4.45 | -40.11 | 45.66 | -27.41 | -3.08 | 17.49 | 58.17 |
| IE CS | 17.56 | 16.41 | -1.08 | -38.36 | 47.73 | -37.43 | 2.10 | 15.30 | 72.47 |
| DFCS | 2.61 | 14.57 | -1.24 | -35.38 | 60.69 | -28.64 | -10.34 | 22.74 | 67.59 |
| IE DFCS | 22.05 | 21.03 | 3.53 | - | 58.13 | 21.23 | 39.57 | 47.59 | 88.81 |

### Example 1. Use of chemically interesterified double fractionated cottonseed stearin for biscuit fat filling.

Biscuit fat filling (for sandwich cookie) has to have a very specific solid content and crystallization behavior. Interesterified double fractionated cottonseed stearin (IE DFCS) produces a viable non-palm alternative for biscuit (cookie) filling. Table 3 shows a biscuit fat filling composition formulated with IE DFCS.

**Table 3. Biscuit filling formulation.**

| Ingredient | % |
|---|---|
| Powdered sugar (6X) | 59.55 |
| Fat as IE DFCS melted | 40.00 |
| Salt | 0.20 |
| Vanilla | 0.25 |

The following procedure was used to form the biscuit filling. The IE DFCS was melted and mixed with the other ingredients. The mixture was cooled by using a scrape surface heat exchanger to start the crystallization process. The biscuit filling was deposited on a biscuit (cookie). The IE DFCS produced a viable non-palm alternative for biscuit (cookie) filling. The biscuit filling had the right consistency such that it was soft enough so the top biscuit adhered to the filling but firm enough so that the filling did not squeeze out of the sandwich biscuit.

### Example 2. Use of chemically interesterified double fractionated cottonseed stearin in icing shortening and icing preparation therefrom.

Based on the physical and chemical properties of the IE DFCS, this fat can be used to make a fat system that is used in the creation of a cake, icing, or filling. Traditionally emulsifiers (such as mono and diglycerides or polysorbate 60) are used to help create cakes, icings, or fillings by reducing the surface tension when combining fat and water. Emulsifiers can help provide emulsion stability, aeration and foam stability, crystal modification or crumb softening. A shortening used for cakes, icings, or fillings can be created by the combination of IE DFCS and emulsifiers or by combining IE DFCS with other fats and emulsifiers. Table 4 shows 2 formulations of an icing shortening made with IE DFCS.

**Table 4. Formulations of an icing shortening made with IE DFCS.**

| Ingredient | % | % |
|---|---|---|
| Fat as IE DFCS | 95.9 | 30.0 |
| Interesterified soybean oil | - | 60.0 |
| Fully hydrogenated fat | - | 5.4 |
| Mono/diglyceride having iodine value 50-57 | 3.5 | 4.0 |
| Polysorbate 60 | 0.6 | 0.6 |

The icing shortening was produced by melting the fat, combining the other ingredients, chilling, crystallization, mechanical working, and packing. To crystallize the icing shortening, a scraped surface heat exchanger (SSHE) was used. Pin rotor machines or intermediate crystallizers were used in combination or individually to perform the mechanical working, which were employed in order to ensure homogeneity.

Icing shortenings are used to make icing or frosting. Icings and frostings can be used for cake decoration. Table 5 shows an icing formulation followed by its preparation procedure.

**Table 5. Icing formulation.**

| Ingredient | % |
|---|---|
| Powdered sugar | 61.67 |
| Icing shortening made with IE DFCS (see recipes in Table 4) | 28.46 |
| Water | 9.17 |
| Salt | 0.24 |
| Vanilla | 0.41 |
| Potassium sorbate | 0.05 |

To make the icing, the shortening, sugar, vanilla, and salt were combined in a mixing bowl. Potassium sorbate was dissolved in water in a separate container. The shortening, sugar, vanilla, and salt were mixed on low for 1 minutes. During this time, half of the water/potassium sorbate mixture was added. The mixer was stopped, and the bowl was scraped. The mixing was resumed on low for 4 minutes. During the first 30 second of mixing, the remaining water/potassium sorbate mixture was added. The mixer was stopped, and the bowl was scraped. The mixing was resumed and continued until the target specific gravity of 0.8 was reached. The IE DFCS produced a viable non-palm alternative for icing.

### Example 3. Use of chemically interesterified double fractionated cottonseed stearin in all-purpose shortening.

Based on physical and chemical properties of IE DFCS, this fat can be used to produce non-palm all-purpose shortening. Non-palm all-purpose shortening can be used in the manufacturing of pies, pound cakes, cookies (biscuits), wafers, fillings, laminated dough, glazes, donut frying, and additional food products. Table 6 gives the formulation of a non-palm all-purpose shortening made with IE DFCS.

**Table 6. Non-palm all-purpose shortening made with IE DFCS.**

| Ingredient | % |
|---|---|
| Fat as IE DFCS | 40.0 |
| Interesterified soybean oil | 53.0 |
| Fully Hydrogenated cottonseed oil | 7.0 |

The all-purpose shortening was produced by melting the fat phase, combining the other ingredients, chilling, crystallization, mechanical working, such as kneading and packing. To chill and crystallize the all-purpose shortening, a scraped surface heat exchanger (SSHE) was used. Pin rotor machines or intermediate crystallizers were used in combination or individually to performing the mechanical working, which were employed in order to ensure homogeneity. The IE DFCS produced a viable non-palm alternative for non-palm all-purpose shortening.

### Example 4. Use of chemically interesterified double fractionated cottonseed stearin or chemically interesterified cotton stearin in a flaked fat.

By combining the IE DFCS or IE CS with other fats, it is possible to create a non-palm flaked shortening. Table 7 presents four formulations of a non-palm flaked fat containing IE DFCS or IE CS.

**Table 7. Non-palm flaked fat compositions.**

| Ingredient | % | % | % | % |
|---|---|---|---|---|
| Fat as IE DFCS | 30.0 | - | - | 10 |
| Fat as IE CS | - | 35 | 20 | - |
| Fully Hydrogenated fat | 70.0 | 65 | 10 | - |
| Interesterified soybean oil | - | - | 70 | 90 |

The fat was melted and the oil was mixed therewith. The flaked fat was created by distributing the melted fat mixture on a stainless steel belt or drum that was cooled by glycol. As the fat moved down the belt or over the drum, it was crystalized into a hardened form. The fat was then scrapped off the belt or drum and broken into smaller pieces called flakes. The IE DFCS oil as well as the IE CS produced a viable non-palm alternative for flaked fat.

The flaked fat was used to make American style biscuit and pizza crust. Following the formulation and preparation procedure for the American biscuit and the pizza crust are presented.

**Table 8 - American style biscuit formulation**

| Ingredient | Percentage |
|---|---|
| Pastry Flour | 44.0 |
| Baking Powder | 2.6 |
| Dextrose | 6.2 |
| Salt | 0.5 |
| Non Fat Dry Milk | 3.5 |
| Shortening | 5.7 |
| Flaked Fat | 11.4 |
| 1^{st} Water | 24.7 |
| 2^{nd} water | 1.4 |

To make the biscuits, all the dry ingredients were added into a 12 quart mixing bowl and mixed on low for 1 minute with a paddle attachment. Bowl and paddle were scraped. Fat flakes were put into the mixing bowl and mixed for 30 seconds while streaming in the first amount of water. Add second water to the bowl and mix for 30 seconds. Bowl and paddle were scraped down, Mixer was stopped and the dough was flipped in the bowl. Mix another 15 seconds on low. Dough was taken out of the mixer and placed onto a floured bench and pressed down to 1.0-1.5 inch thickness. Flour was lightly spread on top of the dough. Dough was rolled into ½ inch thickness using rods as a guide and a rolling pin. Flour was brushed off the dough and then the dough was folded into thirds. The dough was rotated 90 degrees then rolled again so that it does not exceed ½ inch. Dough was cut into 2.25 inch circles using a biscuit cutter. Biscuits were placed on half sheet pan with 2 inches between them. The dough was baked in a pre-heated oven at 375°F for 11.5 minutes.

**Table.9: Pizza crust formulation**

| Ingredient | Percentage |
|---|---|
| All Purpose Flour | 58.6 |
| Vital Wheat Gluten | 0.5 |
| Water | 30.33 |
| Liquid oil (soybean oil) | 2.92 |
| Flaked fat | 4.67 |
| Granulated Sugar | 1.17 |
| Instant Yeast | 0.58 |
| Salt | 1.22 |

All ingredients were combined into a 12 quart McDuffy bowl. All ingredients were mixed on low for 2 minutes, then mixed on medium speed for 7-8 minutes until dough was well developed. Dough was rolled into a ball and allowed to rest covered for 10 minutes. Dough was divided into 250 gram portions and sheeted into 10 inch disk on a reversible sheeter. One side of the dough was docked. Dough rounds were pressed using a heated dough press for 7 seconds at 375 degrees Fahrenheit. Dough was removed from press and allowed to cool for 10 minutes and immediately frozen. The following week, the pizza dough was baked at 400°F for 12 minutes.

### Example 5. Use of chemically interesterified double fractionated cottonseed stearin or use of chemically interesterified cottonseed stearin in soft candy filling.

**Table 10 - Soft candy filling formulation**

| Ingredient | Percentage |
|---|---|
| Fat as IE DFCS or IE CS | 40.0 |
| Sugar | 44.6 |
| Milk Powder | 15.0 |
| Soy lecithin | 0.4 |

To make a soft filling, the fat was melted to 50°C. Dry solid material was added to the mixing bowl. Gradually2/3 of melted fat was added to mixing bowl over a 10 minute mixing period. The speed was increased and the remaining fat was added and mixed for 10 minutes. The lecithin was added and the filling was mixed for 10 minutes. After mixing, the bowl was placed in an ice bath and the filling was hand mixed until it reached the desired temperature. The chocolate shells were filled with the filling and stored at room temperature.

### Example 6. Use of chemically interesterified double fractionated cottonseed stearin or interesterified cotton stearin in chocolate spread

**Table 11 - Chocolate spread formulation**

| Ingredient | Percentage |
|---|---|
| Icing Sugar | 50.99 |
| Cocoa Powder | 8.0 |
| Fat as IE DFCS or IE CS | 22.5 |
| Nut paste | 10.0 |
| Whey powder | 4.0 |
| Skimmed milk powder | 4.0 |
| Lecithin | 0.5 |
| Flavor | 0.01 |

All powdered ingredients were blended together. Nut paste was added and all ingredients were gently mixed by hand. In a separate container, lecithin and melted fat were mixed. Melted fat/lecithin blends was added to the powdered ingredients. Product was poured into jars and allowed to cool. IE DF CS and IE CS both made viable options for a spread formulation.

### Example 7: Using chemically interesterified double fractionated cottonseed stearin in an ice cream coating

**Table 12- Ice cream coating formula**

| Ingredient | Percentage |
|---|---|
| Powdered Sugar | 20.0 |
| IE DF CS | 57.0 |
| Non fat dry milk | 4.7 |
| Chocolate liquor wafers | 18.0 |
| Lecithin | 0.3 |

All ingredients were combined in a microwave safe bowl and heated on high 20 seconds at a time until fully melted (approximately 100°F). The mixture was stirred in between heating cycles. Once thoroughly melted, mixture was mixed continuously by hand and allowed to cool for a few minutes. Previously made ice cream bars were used and were submerged into the coating. Excess coating was allowed to drip off the ice cream bars and then the bars were carefully packaged and stored in the freezer. The IE DFCS made a viable ice cream coating.

The terms and expressions that have been employed are used as terms of description and not of limitation, and there is no intention in the use of such terms and expressions of excluding any equivalents of the features shown and described or portions thereof, but it is recognized that various modifications are possible within the scope of the aspects of the present invention.

## Claims

1. A fat composition for use in a food item, the composition comprising:
interesterified cottonseed stearin with a proportion of C18:2 fatty acid esters of from 30 wt% to 60 wt%.

2. The composition of claim 1, wherein the composition is substantially free of palm oil.

3. The composition of claim 1, wherein the composition is substantially free of fully hydrogenated oils having an iodine value of equal to or less than 4.

4. The composition of claim 1, wherein the composition is substantially free of emulsifiers, non-cottonseed waxes, starch, protein, cellulose, cellulose derivatives, plant-based oils other than interesterified cottonseed stearin, or a combination thereof.

5. The composition of claim 1, wherein about 0.01 wt% to 100 wt% of the composition is the interesterified cottonseed stearin.

6. The composition of claim 1, further comprising non-interesterified cottonseed stearin.

7. The composition of claim 1, wherein the composition further comprises an emulsifier, a wax, a carbohydrate, a protein, cellulose, a cellulose derivative, a food coloring, a filler, a flavoring, a plant-based oil other than interesterified cottonseed stearin, an animal-based oil, or a combination thereof.

8. The composition of claim 1, wherein the composition is a shortening, an all-purpose shortening, an icing shortening, a filling fat, a flaked fat, a frying fat, a pumpable shortening, a cookie shortening, a cake shortening, a pastry shortening, a pie shortening, or a combination thereof.

9. The composition of claim 1, wherein the composition is a biscuit filling, an icing shortening, an all-purpose shortening, or a flaked fat.

10. The composition of claim 1, wherein the food item comprises a fried food item, a bakery food item, a biscuit filling, an icing, a frosting, a confectionary item, a bonbon filling, an ice-cream coating, a chocolate or nut spreads, a margarine or spread (water in oil emulsion) or a combination thereof.

11. The composition of claim 1, wherein the food item comprises a potato chip, a French fry, a fried-chicken product, a tempura product, a biscuit, a cookie, a pie, a cake, a wafer, a filling, a dough, a glaze, a pastry, a donut, an icing, a frosting, a pizza crust, an American style biscuit, a chewing gum, a meat alternative, a dairy analog product, or a combination thereof.

12. A food item comprising the composition of claim 1.

13. A process for preparing the composition of claim 1, wherein the interesterified cottonseed stearin comprises interesterified cottonseed stearin from a first fractionation, interesterified cottonseed stearin from a second fractionation, interesterified cottonseed stearin from more than a second fractionation, interesterified cottonseed stearin from one or more winterization fractionations, or a combination thereof.

14. The process according to claim 2, wherein the interesterified cottonseed stearin comprises chemically interesterified cottonseed stearin.

15. The process according to claim 2, wherein the interesterified cottonseed stearin comprises enzymatically interesterified cottonseed stearin.

## Patentansprüche

1. Fettzusammensetzung zur Verwendung in einem Nahrungsmittel, die Zusammensetzung umfassend:
umgeestertes Baumwollsamenstearin mit einem Anteil von C18: 2-Fettsäureestern zu 30 Gew.-% bis 60 Gew.-%.

2. Zusammensetzung nach Anspruch 1, wobei die Zusammensetzung im Wesentlichen frei von Palmöl ist.

3. Zusammensetzung nach Anspruch 1, wobei die Zusammensetzung im Wesentlichen frei von vollständig hydrierten Ölen ist, die einen Jodwert von gleich oder kleiner als 4 aufweisen.

4. Zusammensetzung nach Anspruch 1, wobei die Zusammensetzung im Wesentlichen frei von Emulgatoren, Nichtbaumwollsamenwachsen, Stärke, Protein, Cellulose, Cellulosederivaten, anderen pflanzlichen Ölen als umgeestertem Baumwollsamenstearin oder einer Kombination davon ist.

5. Zusammensetzung nach Anspruch 1, wobei zu etwa 0,01 Gew.-% bis 100 Gew.-% der Zusammensetzung das umgeesterte Baumwollsamenstearin ist.

6. Zusammensetzung nach Anspruch 1, ferner umfassend nichtumgeestertes Baumwollsamenstearin.

7. Zusammensetzung nach Anspruch 1, wobei die Zusammensetzung ferner einen Emulgator, ein Wachs, ein Kohlenhydrat, ein Protein, Cellulose, ein Cellulosederivat, einen Lebensmittelfarbstoff, einen Füllstoff, einen Aromastoff, ein anderes pflanzliches Öl als umgeestertes Baumwollsamenstearin, ein tierisches Öl oder eine Kombination davon umfasst.

8. Zusammensetzung nach Anspruch 1, wobei die Zusammensetzung ein Backfett, ein Universalbackfett, ein Glasurbackfett, ein Füllungsfett, ein flockiges Fett, ein Frittierfett, ein pumpfähiges Backfett, ein Keksbackfett, ein Kuchenbackfett, ein Gebäckbackfett, ein Tortenbackfett oder eine Kombination davon ist.

9. Zusammensetzung nach Anspruch 1, wobei die Zusammensetzung eine Plätzchenfüllung, ein Glasurbackfett, ein Universalbackfett oder ein flockiges Fett ist.

10. Zusammensetzung nach Anspruch 1, wobei das Nahrungsmittel ein frittiertes Nahrungsmittel, ein Backnahrungsmittel, eine Plätzchenfüllung, eine Glasur, einen Zuckerguss, eine Süßware, eine Bonbonfüllung, eine Eiscremebeschichtung, einen Schokoladen- oder Nussaufstrich, eine Margarine oder einen Aufstrich (Wasser-in-Öl-Emulsion) oder eine Kombination davon umfasst.

11. Zusammensetzung nach Anspruch 1, wobei das Nahrungsmittel einen Kartoffelchip, eine Pommes frites, ein frittiertes Hähnchenprodukt, ein Tempuraprodukt, ein Plätzchen, einen Keks, eine Torte, einen Kuchen, eine Waffel, eine Füllung, einen Teig, einen Tortenguss, ein Gebäck, einen Donut, eine Glasur, einen Zuckerguss, eine Pizzakruste, ein Brötchen nach amerikanischer Art, einen Kaugummi, eine Fleischalternative, ein Milchanalogprodukt oder eine Kombination davon umfasst.

12. Nahrungsmittel, umfassend die Zusammensetzung nach Anspruch 1.

13. Verfahren zum Herstellen der Zusammensetzung nach Anspruch 1, wobei das umgeesterte Baumwollsamenstearin umgeestertes Baumwollsamenstearin aus einer ersten Fraktionierung, umgeestertes Baumwollsamenstearin aus einer zweiten Fraktionierung, umgeestertes Baumwollsamenstearin aus mehr als einer zweiten Fraktionierung, umgeestertes Baumwollsamenstearin aus einer oder mehreren Winterisierungsfraktionierungen oder eine Kombination davon umfasst.

14. Verfahren nach Anspruch 2, wobei das umgeesterte Baumwollsamenstearin chemisch umgeestertes Baumwollsamenstearin umfasst.

15. Verfahren nach Anspruch 2, wobei das umgeesterte Baumwollsamenstearin enzymatisch umgeestertes Baumwollsamenstearin umfasst.

## Revendications

1. Composition de graisse pour utilisation dans un article alimentaire, la composition comprenant :
de la stéarine de graines de coton interestérifiée avec une proportion d'esters d'acide gras en C18:2 allant de 30 % en poids à 60 % en poids.

2. Composition selon la revendication 1, dans laquelle la composition est sensiblement dépourvue d'huile de palme.

3. Composition selon la revendication 1, dans laquelle la composition est sensiblement dépourvue d'huiles complètement hydrogénées ayant un indice d'iode égal ou inférieur à 4.

4. Composition selon la revendication 1, dans laquelle la composition est sensiblement dépourvue d'émulsifiants, de cires non issues de graines de coton, d'amidon, de protéines, de cellulose, de dérivés de cellulose, d'huiles végétales autres que stéarine de graines de coton interestérifiée, ou d'une combinaison de ceux-ci.

5. Composition selon la revendication 1, dans laquelle environ 0,01 % en poids à 100 % en poids de la composition est de la stéarine de graines de coton interestérifiée.

6. Composition selon la revendication 1, comprenant en outre de la stéarine de graines de coton non interestérifiée.

7. Composition selon la revendication 1, dans laquelle la composition comprend en outre un émulsifiant, une cire, un glucide, une protéine, de la cellulose, un dérivé de cellulose, un colorant alimentaire, un fourrage, un arôme, une huile d'origine végétale autre que de la stéarine de graines de coton interestérifiée, une huile d'origine animale, ou une combinaison de ceux-ci.

8. Composition selon la revendication 1, dans laquelle la composition est une matière grasse solide, une matière grasse solide multi-usage, une matière grasse solide pour glaçage, une graisse pour fourrage, une graisse en paillettes, une graisse de friture, une matière grasse solide apte au pompage, une matière grasse solide pour cookies, une matière grasse solide pour gâteaux, une matière grasse solide pour pâtisserie, une matière grasse solide pour tartes, ou une combinaison de celles-ci.

9. Composition selon la revendication 1, dans laquelle la composition est un fourrage de biscuit, une matière grasse solide pour glaçage, une matière grasse solide multi-usage, ou une graisse en paillettes.

10. Composition selon la revendication 1, dans laquelle l'article alimentaire comprend un article alimentaire frit, un article alimentaire de boulangerie, un fourrage pour biscuits, un glaçage, une garniture, un article de confiserie, un fourrage pour bonbons, un nappage pour crème glacée, une pâte à tartiner au chocolat ou aux noix, une margarine ou une pâte à tartiner (émulsion eau dans huile) ou une combinaison de ceux-ci.

11. Composition selon la revendication 1, dans laquelle l'article alimentaire comprend une chips de pomme de terre, une frite, un produit de poulet frit, un produit en tempura, un biscuit, un cookie, une tarte, un gâteau, une gaufrette, une garniture, une pâte, un glaçage, une pâtisserie, un beignet, un glaçage, une pâte à glaçage, une pâte à pizza, un biscuit à l'américaine, un chewing-gum, un substitut de viande, un produit laitier de substitution, ou une combinaison de ceux-ci.

12. Article alimentaire comprenant la composition selon la revendication 1.

13. Procédé permettant de préparer la composition selon la revendication 1, dans lequel la stéarine de graines de coton interestérifiée comprend de la stéarine de graines de coton interestérifiée provenant d'un premier fractionnement, de la stéarine de graines de coton interestérifiée provenant d'un second fractionnement, de la stéarine de graines de coton interestérifiée provenant de plus d'un second fractionnement, de la stéarine de graines de coton interestérifiée provenant d'une ou plusieurs frigélisations, ou une combinaison de ceux-ci.

14. Procédé selon la revendication 2, dans lequel la stéarine de graines de coton interestérifiée comprend de la stéarine de graines de coton chimiquement interestérifiée.

15. Procédé selon la revendication 2, dans lequel la stéarine de graines de coton interestérifiée comprend de la stéarine de graines de coton enzymatiquement interestérifiée.
